# EUROPEAN PATENT APPLICATION

(11) **EP 3 920 094 A2**
(43) Date of publication of application: **08.12.2021**
(21) Application number: 21204097.6
(22) Date of filing: 22.10.2021
(51) Int. Cl.: G06K 9/00, G06K 9/62

(54) **METHOD AND APPARATUS FOR UPDATING USER IMAGE RECOGNITION MODEL**

(30) Priority: 30.11.2020 CN 202011371250
(71) Applicant: Apollo Intelligent Connectivity (Beijing) Technology Co., Ltd., Beijing 100176 (CN)
(72) Inventor: ZOU, Chuanfei, Beijing, 100085 (CN)
(74) Representative: Lucke, Andreas

(57) **Abstract**

The present disclosure provides a method and apparatus for updating a user image recognition model, and relates to the field of model training. According to the method for updating a user image recognition model provided by embodiments of the present disclosure, user image data of at least one target user is acquired; the user image data is input to a pre-trained user image recognition model respectively, to obtain a corresponding recognition result; in responding to determining that the recognition result is an incorrect recognition result, correction information of the incorrect recognition result is acquired; and the user image recognition model is updated based on the user image data corresponding to the incorrect recognition result, and the correction information, to obtain an updated user image recognition model. The method effectively improves the recognition effect of the user image recognition model.

## Description

### TECHNICAL FIELD

The present disclosure relates to the field of computer technology, specifically, to the technical field of model training, and in particular, to a method and apparatus for updating a user image recognition model.

### BACKGROUND

At present, the image recognition in vehicle often has poor effects or likely has a false detection, due to illumination, obstructions, angles or inadvertent actions.

The current solutions include mainly two types, i.e., 1) according to conditions of vehicles fed back by users and the physical features of users, such as long or short hair, hair color, height and surrounding environment, the simulation tests are performed on real cars and the data is collected; and 2) the data is collected all the time indiscriminately, and the collected data is analyzed.

### SUMMARY

Embodiments of the present disclosure provide a method, apparatus for updating a user image recognition model, a device and a storage medium.

According to a first aspect, an embodiment of the present disclosure provides a method for updating a user image recognition model, and the method includes: acquiring user image data of at least one target user; inputting the user image data of at least one target user to a pre-trained user image recognition model respectively, to obtain a corresponding recognition result, the user image recognition model being configured to recognize the user image data; acquiring, in responding to determining that the recognition result is an incorrect recognition result, correction information of the incorrect recognition result, the correction information being used to indicate a correct recognition result of the user image data corresponding to the incorrect recognition result; and updating the user image recognition model based on the user image data corresponding to the incorrect recognition result, and the correction information, to obtain an updated user image recognition model.

In some embodiments, the updating the user image recognition model based on the user image data corresponding to the incorrect recognition result, and the correction information, includes: updating, in response to acquiring an update instruction containing designated information used to reflect correction information selected by a user, the user image recognition model based on correction information matching the designated information, and the user image data corresponding to the correction information matching the designated information.

In some embodiments, the designated information includes class information of a class to which the correction information selected by the user belongs, and the updating the user image recognition model based on the correction information matching the designated information, and the user image data corresponding to the correction information matching the designated information, includes: updating the user image recognition model based on first correction information and the user image data corresponding to the first correction information, where a class of the first correction information matches the designated information.

In some embodiments, the designated information includes a target user identification corresponding to the correction information selected by the user, and the updating the user image recognition model based on the correction information matching the designated information, and the user image data corresponding to the correction information matching the designated information, includes: updating the user image recognition model based on second correction information and the user image data corresponding to the second correction information, where a target user identification corresponding to the second correction information matches the designated information.

In some embodiments, the designated information includes a target user identification corresponding to the correction information selected by the user, and class information of a class to which the correction information selected by the user belongs, and the updating the user image recognition model, based on the correction information matching the designated information, and the user image data corresponding to the correction information matching the designated information, includes: updating the user image recognition model based on third correction information and the user image data corresponding to the third correction information, where a target user identification corresponding to the third correction information matches the designated information, and a class of the third correction information matches the designated information.

In some embodiments, the acquiring user image data of at least one target user, includes: acquiring, in response to obtaining authorization of the at least one target user, the user image data of the at least one target user.

In some embodiments, the updating the user image recognition model based on the user image data corresponding to the incorrect recognition result, and the correction information, includes: updating, in response to a number of a piece of the user image data corresponding to the incorrect recognition result being greater than or equal to a preset number threshold, the user image recognition model based on the user image data corresponding to the incorrect recognition result, and the correction information.

According to a second aspect, an embodiment of the present disclosure provides an apparatus for updating a user image recognition model, and the apparatus includes: an acquisition module, configured to acquire user image data of at least one target user; a recognition module, configured to input the user image data of at least one target user to a pre-trained user image recognition model respectively, to obtain a corresponding recognition result, the user image recognition model being configured to recognize the user image data; a correction module, configured to acquire, in responding to determining that the recognition result is an incorrect recognition result, correction information of the incorrect recognition result, the correction information being used to indicate a correct recognition result of the user image data corresponding to the incorrect recognition result; and an update module, configured to updating the user image recognition model based on the user image data corresponding to the incorrect recognition result, and the correction information, to obtain an updated user image recognition model.

In some embodiments, the update module is further configured to: update, in response to acquiring an update instruction containing designated information used to reflect correction information selected by a user, the user image recognition model based on correction information matching the designated information, and the user image data corresponding to the correction information matching the designated information.

In some embodiments, the designated information includes class information of a class to which the correction information selected by the user belongs, and the updating the user image recognition model based on the correction information matching the designated information, and the user image data corresponding to the correction information matching the designated information, includes: updating the user image recognition model based on first correction information and the user image data corresponding to the first correction information, where a class of the first correction information matches the designated information.

In some embodiments, the designated information includes a target user identification corresponding to the correction information selected by the user, and the updating the user image recognition model based on the correction information matching the designated information, and the user image data corresponding to the correction information matching the designated information, includes: updating the user image recognition model based on second correction information and the user image data corresponding to the second correction information, where a target user identification corresponding to the second correction information matches the designated information.

In some embodiments, the designated information includes a target user identification corresponding to the correction information selected by the user, and class information of a class to which the correction information selected by the user belongs, and the updating the user image recognition model, based on the correction information matching the designated information, and the user image data corresponding to the correction information matching the designated information, includes: updating the user image recognition model based on third correction information and the user image data corresponding to the third correction information, where a target user identification corresponding to the third correction information matches the designated information, and a class of the third correction information matches the designated information.

In some embodiments, the acquisition module is further configured to: acquire, in response to obtaining authorization of the at least one target user, the user image data of the at least one target user.

In some embodiments, the update module is further configured to: update, in response to a number of a piece of the user image data corresponding to the incorrect recognition result being greater than or equal to a preset number threshold, the user image recognition model based on the user image data corresponding to the incorrect recognition result, and the correction information.

According to a third aspect, an embodiment of the present disclosure provides an electronic device, and the electronic device includes one or more processors; and a memory storing one or more programs, where the one or more programs, when executed by the one or more processors, cause the one or more processors to implement the method for updating a user image recognition model as described in any of the embodiments of the first aspect.

According to a fourth aspect, an embodiment of the present disclosure provides a computer readable medium storing computer programs, and the computer programs, when executed by a processor, implement the method for updating a user image recognition model as described in any of the embodiments of the first aspect.

According to a fifth aspect, an embodiment of the present disclosure provides a computer program including instructions which, when the program is executed by a computer, cause the computer to perform the method for updating a user image recognition model as described in any of the embodiments of the first aspect.

According to the present disclosure, the user image data of the at least one target user is acquired; the user image data of the at least one target user is input to the pre-trained user image recognition model respectively, to obtain the corresponding recognition result, the user image recognition model being configured to recognize the user image data; in responding to determining that the recognition result is the incorrect recognition result, the correction information of the incorrect recognition result is acquired, the correction information being used to indicate the correct recognition result of the user image data corresponding to the incorrect recognition result; and the user image recognition model is updated based on the user image data corresponding to the incorrect recognition result, and the correction information, to obtain the updated user image recognition model. The user image recognition model is updated based on user image data of which the recognition result by the user image recognition model is incorrect. The recognition effect of the updated user image recognition model may be effectively improved.

It should be appreciated that the content described in this section is not intended to identify the key or critical features of embodiments of the present disclosure, nor is it intended to limit the scope of the present disclosure. The other features of the present disclosure will become easy to understand through the following description.

### BRIEF DESCRIPTION OF THE DRAWINGS

Fig. 1 is an example system architecture diagram to which the present disclosure may be applied;
Fig. 2 is a flowchart of an embodiment of a method for updating a user image recognition model according to the present disclosure;
Fig. 3 is a schematic diagram of an application of the method for updating a user image recognition model according to the present disclosure;
Fig. 4 is a flowchart of another embodiment of the method for updating a user image recognition model according to the present disclosure;
Fig. 5 is a schematic diagram of an embodiment of an apparatus for updating a user image recognition model according to the present disclosure; and
Fig. 6 is a schematic structural diagram of a computer system of an electronic device adapted to implement embodiments of the present disclosure.

### DETAILED DESCRIPTION OF EMBODIMENTS

Example embodiments of the present disclosure are described below in combination with the accompanying drawings, where various details of the embodiments of the present disclosure are included to facilitate understanding and should be considered as examples only. Therefore, those of ordinary skill in the art should realize that various changes and modifications may be made to the embodiments described herein without departing from the scope and spirit of the present disclosure. Similarly, for clarity and conciseness, descriptions of well-know functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

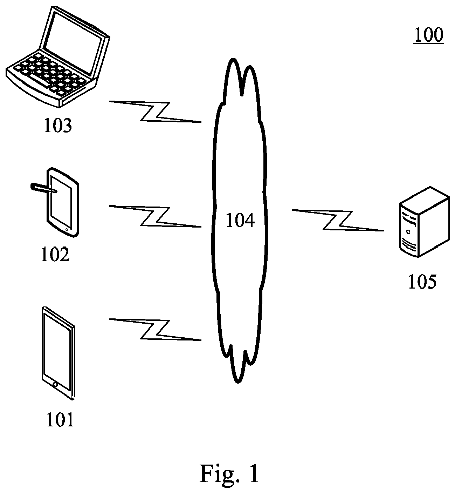

Fig. 1 shows an example system architecture 100 to which an embodiment of a method for updating a user image recognition model according to the present disclosure may be applied.

As shown in Fig. 1, the system architecture 100 may include terminal devices 101, 102, 103, a network 104 and a server 105. The network 104 serves as a medium for providing a communication link between the terminal devices 101, 102, 103 and the server 105. The network 104 may include various types of connections, such as wired or wireless communication links, or optical fiber cables.

A user may use the terminal devices 101, 102, 103 to interact with the server 105 through the network 104 to receive or send messages. Various communication client applications, such as image processing applications and image recognition applications, may be installed on the terminal devices 101, 102, 103.

The terminal devices 101, 102, 103 may be hardware or software. When the terminal devices 101, 102, 103 are hardware, the terminal devices 101, 102, 103 may be various electronic devices having a display screen, including but not limited to, a phone and a laptop computer; and when the terminal devices 101, 102, 103 are software, the terminal devices 101, 102, 103 may be installed in the electronic devices, and may be implemented as multiple software pieces or software modules (such as for providing update services of a user image recognition model), or as a single software piece or software module, which is not specifically limited herein.

The server 105 may be a server providing various services. For example, user image data of at least one target user sent by the terminal devices 101, 102, 103 is acquired; the user image data of at least one target user is input to a pre-trained user image recognition model respectively, to obtain a corresponding recognition result; in responding to determining that the recognition result is an incorrect recognition result, correction information of the incorrect recognition result is acquired; and the user image recognition model is updated based on the user image data and the correction information, to obtain an updated user image recognition model, the user image data corresponding to the incorrect recognition result.

It should be noted that the server 105 may be hardware or software. When the server 105 is hardware, the server 105 may be implemented as a distributed server cluster composed of multiple servers, or as a single server; and when the server 105 is software, the server 105 may be implemented as multiple software pieces or software modules (such as for providing update services of a user image recognition model), or as a single software piece or software module, which is not specifically limited herein.

It should be noted that the method for updating a user image recognition model provided by the embodiments of the present disclosure may be executed by the server 105 or the terminal devices 101, 102, 103 or the server 105 and the terminal devices 101, 102, 103 in cooperation with each other. Correspondingly, parts (such as units, sub-units, modules and sub-modules) included in the apparatus for updating a user image recognition model may be all arranged in the server 105, or may be all arranged in the terminal devices 101, 102, 103, or may be arranged in the server 101 and the terminal devices 101, 102, 103, respectively.

It should be appreciated that the number of the terminal devices, the network and the server in Fig. 1 is merely illustrative. Any number of terminal devices, networks and servers maybe provided according to actual requirements.

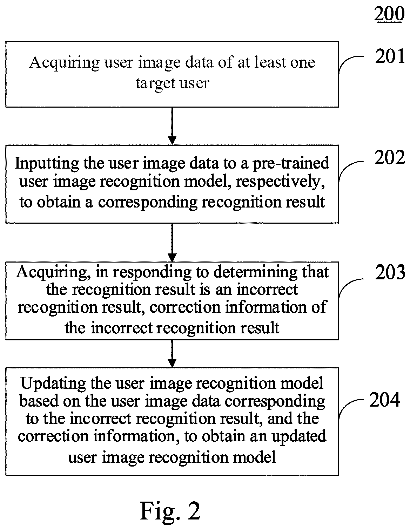

Fig. 2 shows a flowchart 200 of an embodiment of a method for updating a user image recognition model. The method for updating a user image recognition model includes steps 201 to 204.

Step 201 includes acquiring user image data of at least one target user.

In this embodiment, an execution body (such as the server 105 or the terminal devices 101, 102, 103 shown in Fig. 1) may directly acquire the user image data of one or more target users, or may receive the user image data uploaded by one or more target users in a wired or wireless mean. The target users herein refer to the users in the in-vehicle environment. The user image data is not limited to user face images, user body part images, user gesture images, and user behavior images.

Specifically, the execution body may acquire the user image data of a target user A1 in a vehicle A, the user image data of a target user B1 in a vehicle B, and the user image data of a target user C1 in a vehicle C through an in-vehicle image acquisition device.

The user image data may be user image data acquired under the authorization of the target users, or may be user image data acquired indiscriminately without the authorization of the users, which is not limited herein.

In some alternative implementations, the acquiring the user image data of the at least one target user, includes: acquiring, in response to obtaining the authorization of the at least one target user, the user image data of the at least one target user.

In this implementation, only after obtaining the authorization of the target user, the execution body may control the in-vehicle image acquisition device to acquire the user image data of the target user.

The execution body may obtain the authorization of the user in various ways, such as receiving an instruction for agreeing to perform image acquisition input by the target user, detecting that the user initiates an image acquisition device, and the like.

Specifically, the vehicle A has a speech recognition function, and the user enters the vehicle A and issues a "start" instruction, and in response to receiving the instruction "start" of the user, i.e., obtaining the authorization of the user, the execution body controls to turn on the image acquisition device to acquire the user image data.

According to this implementation, the user image data of at least one target user is acquired in response to obtaining the authorization of the target user, the problem of poor effectiveness of the user image data caused by indiscriminately acquiring images without the authorization of the target user may be effectively avoided, and the user image data in a specific scenario may be obtained in a targeted way, while protecting the privacy of the user.

Step 202 includes inputting the user image data of at least one target user to a pre-trained user image recognition model respectively, to obtain a corresponding recognition result.

In this embodiment, the execution body may input the acquired user image data to the pre-trained user image recognition model respectively, to obtain the corresponding recognition result. The user image recognition model is configured to recognize user-related information contained in the user image data, such as user identity information and user gestures. The user image recognition model may be trained based on a large amount of user image data labeled with recognition results.

The execution body may deploy the user image recognition model online, and specifically, the execution body may deploy the user image recognition model on a cloud server.

It should be noted that the user image recognition model may use a neural network model in the existing technology or in future development technology, such as, a convolutional neural network model, a deep neural network model, or a recurrent neural network model, which is not limited herein.

Step 203 includes acquiring, in responding to determining that the recognition result is an incorrect recognition result, correction information of the incorrect recognition result.

In this embodiment, after inputting the acquired user image data to the user image recognition model to obtain the recognition result of the user image data, the execution body may display the user image data and the corresponding recognition result to receive a manually input determination result. The execution body may further determine whether the recognition result is the incorrect recognition result based on the manually input determination result, or may match the recognition result with a preset recognition result to determine whether the recognition result is the incorrect recognition result, which is not limited herein.

If the recognition result is the incorrect recognition result, the correction information of the incorrect recognition result is further acquired. The correction information is used to indicate a correct recognition result of the user image data corresponding to the incorrect recognition result.

After acquiring the correction information of the incorrect recognition result, the execution body may store the correction information and the user image data corresponding to the incorrect recognition result.

Specifically, the execution body acquires user image data of a target user, and user-related information contained in the user image data is a thumb-up agreeing gesture of the user, that is, a recognition result of the user image data is a thumb-up agreeing gesture. A recognition result obtained by inputting the user image data to the pre-trained user image recognition model by the execution body is a thumb-up disagreeing gesture. The execution body displays the user image data and the recognition result, determines that the recognition result is an incorrect recognition result in response to receiving the information that the manually input recognition result is the incorrect recognition result and receiving the correction information (the thumb-up agreeing gesture) of the incorrect recognition result, and stores the user image data and the correction information.

Step 204 includes updating the user image recognition model based on the user image data corresponding to the incorrect recognition result, and the correction information, to obtain an updated user image recognition model.

In this embodiment, the execution body may update the user image recognition model by using the user image data corresponding to the incorrect recognition result and the correction information as training samples, to obtain the updated image recognition model.

Specifically, the execution body may train the user image recognition model to update parameters in the user image recognition model by using the user image data corresponding to the incorrect recognition result as an input of the user image recognition model, and using the correction information corresponding to the user image data as an expected output, and in response to a loss function of the user image recognition model meeting a preset condition, complete the training of the user image recognition model to obtain the updated user image recognition model.

It should be noted that if there are pieces of user image data corresponding to multiple incorrect recognition results and pieces of correction information, the execution body may directly update the user image recognition model based on the pieces of user image data corresponding to the multiple incorrect recognition results and the pieces of correction information, or may update the user image recognition model based on a part of the pieces of user image data corresponding to the incorrect recognition result and a part of the pieces of correction information selected by the user, which is not limited herein.

In addition, the execution body may directly update the user image recognition model based on the user image data corresponding to the incorrect recognition result and the correction information, or may update, in response to a number of the pieces of the user image data corresponding to the incorrect recognition result being greater than or equal to a preset number threshold, the user image recognition model to obtain the updated user image recognition model.

In some alternative implementations, the updating the user image recognition model based on the correction information, and the user image data corresponding to the incorrect recognition result to obtain the updated user image recognition model, includes: updating, in response to a number of a piece of the user image data corresponding to the incorrect recognition result being greater than or equal to the preset number threshold, the user image recognition model based on the user image data corresponding to the incorrect recognition result and the correction information, to obtain the updated user image recognition model.

In this implementation, when the number of the piece of the user image data corresponding to the incorrect recognition result is greater than or equal to the preset number threshold, such as 1000 pieces or 10000 pieces, the execution body may update the user image recognition model to obtain the updated user image recognition model.

The preset number threshold may be set according to experience, actual requirements and specific application scenarios, which is not limited herein.

According to this implementation, in response to the number of the piece of the user image data corresponding to the incorrect recognition result being greater than or equal to the preset number threshold, the user image recognition model is updated based on the correction information and the user image data corresponding to the incorrect recognition result to obtain the updated user image recognition model, thereby effectively avoiding the frequent update of the model and improving the update effectiveness of the model.

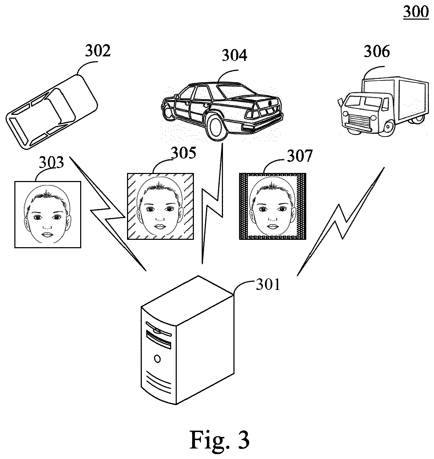

Further referring to Fig. 3, Fig. 3 is a schematic diagram of an application scenario of the method for updating a user image recognition model according to this embodiment.

In the application scenario of Fig. 3, in a specific example, the execution body 301 acquires the user image data 303 of the target user A in the vehicle 302, where the user image data 303 is an image containing the face of the target user A, acquires the user image data 305 of the target user B in the vehicle 304, where the user image data 305 is an image containing the face of the target user B, acquires the user image data 307 of the target user C in the vehicle 306, where the user image data 307 is an image containing the face of the target user C, and inputs the user image data 303, 305, 307 to a pre-trained user image recognition model respectively, to obtain corresponding recognition results, where the user image recognition model is configured to recognize the user image data, and the recognition results of the user image data 303 and 307 are incorrect recognition results, that is, the user image recognition model can not correctly recognize the user image data 303 and 307, e.g., the user image recognition model can not recognize whether the images in the user image data 303 and 307 are human faces, and the execution body may then acquire correction information corresponding to the user image data 303 and correction information corresponding to the user image data 307, and store the user image data 303 and the corresponding correction information, the user image data 307 and the corresponding correction information. Further, the execution body may update the user image recognition model based on the user image data 303 corresponding to the incorrect recognition result and the correction information corresponding to the user image data 303, and the user image data 307 corresponding to the incorrect recognition result and the correction information corresponding to the user image data 307, to obtain the updated user image recognition model.

According to the method for updating a user image recognition model provided by the embodiments of the present disclosure, the user image data of the at least one target user is acquired; the user image data is input to the pre-trained user image recognition model respectively, to obtain the corresponding recognition result, the user image recognition model being configured to recognize the user image data; in responding to determining that the recognition result is the incorrect recognition result, the correction information of the incorrect recognition result is acquired, the correction information being used to indicate the correction recognition result of the user image data corresponding to the incorrect recognition result; and the user image recognition model is updated, based on the correction information and the user image data corresponding to the incorrect recognition result, to obtain the updated user image recognition model, the user image data corresponding to the incorrect recognition result. The recognition effect of the user image recognition model may be effectively improved.

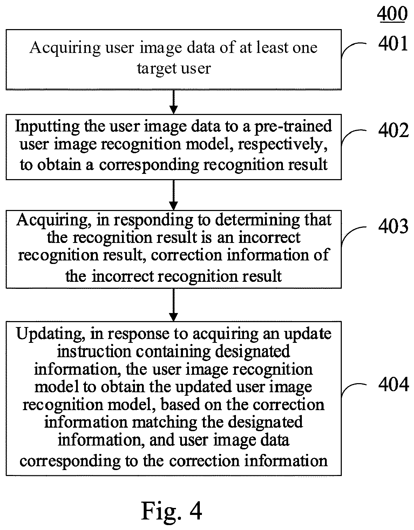

Further referring to Fig. 4, a flow 400 of another embodiment of the method for updating a user image recognition model is shown. In this embodiment, the flow 400 of the method for updating a user image recognition model may include steps 401 to 404.

Step 401 includes acquiring user image data of at least one target user.

In this embodiment, the step 401 is substantially the same as the step 201 in the embodiment corresponding to Fig. 2, and is not described in detail herein.

Step 402 includes inputting the user image data of at least one target user to a pre-trained user image recognition model respectively, to obtain a corresponding recognition result.

In this embodiment, the step 402 is substantially the same as the step 202 in the embodiment corresponding to Fig. 2, and is not described in detail herein.

Step 403 includes acquiring, in responding to determining that the recognition result is an incorrect recognition result, correction information of the incorrect recognition result.

In this embodiment, the step 403 is substantially the same as the step 203 in the embodiment corresponding to Fig. 2, and is not described in detail herein.

Step 404 includes updating, in response to acquiring an update instruction containing designated information, the user image recognition model based on the correction information matching the designated information, and user image data corresponding to the correction information, to obtain the updated user image recognition model.

In this embodiment, if the execution body acquires the instruction containing the designated information input by the user, where the designated information is used to reflect the correction information selected by the user, the correction information matching the designated information may be determined from multiple pieces of user image data corresponding to multiple incorrect recognition results and multiple pieces of correction information, and the execution body further updates the user image recognition model based on the determined matched correction information and the corresponding user image data to obtain the updated user image recognition model.

Specifically, there are currently pieces of user image data corresponding to 5 incorrect recognition results and pieces of correction information, which are "user image data 1-image containing user extremities", "user image data 2-image containing user upper extremities", "user image data 3-image containing user extremities", "user image data 4-image containing user extremities" and "user image data 5-image containing user upper extremities". If a received instruction containing the designated information sent by the user is "image containing user extremities", the user image recognition model is updated based on "user image data 1-image containing user extremities", "user image data 3-image containing user extremities" and "user image data 4-image containing user extremities", to obtain the updated user image recognition model.

In some alternative implementations, the updating the user image recognition model based on the correction information matching the designated information, and user image data corresponding to the correction information, includes: updating the user image recognition model based on first correction information and the user image data corresponding to the first correction information, where a class to which the first correction information belongs matches the designated information.

In this implementation, the designated information includes class information of a class to which the correction information selected by the user belongs. The class information includes at least one of a user face class, a user gesture class or a user behavior class. After acquiring the instruction containing the designated information, the execution body may determine the first correction information from multiple pieces of user image data corresponding to the incorrect recognition results and multiple pieces of correction information, where the class of the correction information matches the class information in the designated information, and the execution body further updates the user image recognition model based on the determined first correction information and the user image data corresponding to the first correction information to obtain the updated user image recognition model.

Specifically, there are currently pieces of user image data corresponding to 5 incorrect recognition results and pieces of correction information, which are "user image data 1-user agreeing gesture", "user image data 2-user face", "user image data 3-user disagreeing gesture", "user image data 4-user agreeing gesture" and "user image data 5-user face". If a received instruction containing the designated information sent by the user is an updating instruction of "user gesture", "user image data 1-user approval gesture", "user image data 3-user disagreeing gesture" and "user image data 4-user agreeing gesture" are determined as the first correction information matching the designated information and the corresponding user image data, and the user image recognition model is updated based on the first correction information and the user image data corresponding to the first correction information, i.e., "user image data 1-user agreeing gesture", "user image data 3-user disagreeing gesture" and "user image data 4-user approval gesture" to obtain the updated user image recognition model.

According to this implementation, the user image recognition model is updated based on the first correction information and the user image data corresponding to the first correction information, where the class of the first correction information matches the designated information, so that the refined recognition effect of the updated user image recognition model on the user image data of a designated class is effectively improved.

In some alternative implementations, the updating the user image recognition model based on the correction information matching the designated information, and user image data corresponding to the correction information, includes: updating the user image recognition model based on second correction information and the user image data corresponding to the second correction information, where a target user identification corresponding to the second correction information matches the designated information.

In this implementation, the designated information includes a target user identification corresponding to the correction information selected by the user. After acquiring the instruction containing the designated information, the execution body may determine the second correction information from pieces of user image data corresponding to multiple incorrect recognition results and pieces of correction information, where the target user identification corresponding to the correction information matches the target user identification in the designated information, and the execution body further updates the user image recognition model based on the determined second correction information and the user image data corresponding to the second correction information to obtain the updated user image recognition model.

The target user identification corresponding to the correction information may be contained in the correction information, or may be determined based on the source of the user image data corresponding to the correction information, which is not limited herein.

Specifically, there are currently pieces of user image data corresponding to 5 incorrect recognition results and pieces of correction information, which are "user image data 1-image of the target user A", "user image data 2-image of the target user B", "user image data 3-image of the target user C", "user image data 4-image of the target user A" and "user image data 5-image of the target user A". If a received instruction containing the designated information sent by the user is an updating instruction of "the target user A", "user image data 1-image of the target user A", "user image data 4-image of the target user A" and "user image data 5-image of the target user A" are determined as the second correction information matching the designated information and the user image data corresponding to the second correction information, and the user image recognition model is updated based on the second correction information and the user image data corresponding to the second correction information, i.e., "user image data 1-image of the target user A", "user image data 4-image of the target user A" and "user image data 5-an image of the target user A" to obtain the updated user image recognition model.

According to this implementation, the user image recognition model is updated based on the second correction information and the user image data corresponding to the second correction information, where the target user identification corresponding to the second correction information matches the designated information, so that the refined recognition effect of the updated user image recognition model on the user image data of the specified user is effectively improved.

In some alternative implementations, the updating the user image recognition model based on the correction information matching the designated information, and user image data corresponding to the correction information, includes: updating the user image recognition model based on third correction information and the user image data corresponding to the third correction information, where a target user identification corresponding to the third correction information and a class of the third correction information match the designated information.

In this implementation, the designated information includes a target user identification corresponding to the correction information selected by the user, and class information of a class to which the correction information selected by the user belongs. After acquiring the instruction containing the designated information, the execution body may determine the third correction information from pieces of user image data corresponding to multiple incorrect recognition results and pieces of correction information, where the target user identification corresponding to the third correction information matches the target user identification in the designated information, and the class of the third correction information matches the class information in the designated information, and the execution body further updates the user image recognition model based on the determined matched third correction information and the user image data corresponding to the third correction information to obtain the updated user image recognition model.

Specifically, there are currently pieces of user image data corresponding to 5 incorrect recognition results and pieces of correction information, which are "user image data 1-image of the target user A-gesture image", "user image data 2-image of the target user B-face image", "user image data 3-image of the target user C-gesture image", "user image data 4-image of the target user A-face image" and "user image data 5-image of the target user A-gesture image". If a received instruction containing the designated information sent by the user is an updating instruction "the target user A-gesture image", "user image data 1-image of the target user A-gesture image" and "user image data 5-image of the target user A-gesture image" are determined as the third correction information matching the designated information and the user image data corresponding to the third correction information, and the user image recognition model is updated based on the third correction information and the user image data corresponding to the third correction information, i.e., "user image data 1-image of the target user A-gesture image" and "user image data 5-image of the target user A-gesture image" to obtain the updated user image recognition model.

According to this implementation, the user image recognition model is updated based on the third correction information and the user image data corresponding to the third correction information, where the target user identification corresponding to the third correction information matches the designated information, and the class of the third correction information matches the designated information, so that the refined recognition effect of the updated user image recognition model on the user image data of the specified class of the specified user is effectively improved.

As can be seen from Fig. 4, compared with the embodiment corresponding to Fig. 2, the flow 400 of the method for updating a user image recognition model in this embodiment highlights that, in response to acquiring the update instruction containing designated information, the user image recognition model is updated based on the correction information matching the designated information, and the user image data corresponding to the correction information, so that the execution body may update the user image recognition model based on the user image data designated by the user, and the refined degree of recognizing the user image data by the updated user image recognition model may be improved in a targeted way, thereby further improving the recognition effect of the model.

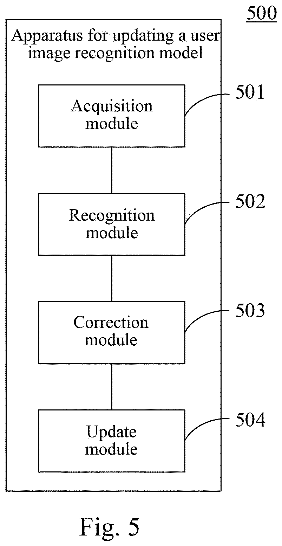

Further referring to Fig. 5, as an implementation of the method shown in above figures, the present disclosure provides an embodiment of an apparatus for updating a user image recognition model. The embodiment of the apparatus corresponds to the embodiment of the method shown in Fig. 2, and the apparatus is particularly applicable to various electronic devices.

As shown in Fig. 5, the apparatus 500 for updating a user image recognition model of this embodiment includes: an acquisition module 501, a recognition module 502, a correction module 503 and an update module 504.

The acquisition module 501 is configured to acquire user image data of at least one target user.

The recognition module 502 is configured to input the user image data of at least one target user to a pre-trained user image recognition model respectively, to obtain a corresponding recognition result, the user image recognition model being configured to recognize the user image data.

The correction module 503 is configured to acquire, in responding to determining that the recognition result is an incorrect recognition result, correction information of the incorrect recognition result, the correction information being used to indicate a correct recognition result of the user image data corresponding to the incorrect recognition result.

The update module 504 is configured to update the user image recognition model based on the user image data corresponding to the incorrect recognition result, and the correction information, to obtain an updated user image recognition model,.

In some alternative implementations of this embodiment, the update module is further configured to: update, in response to acquiring an update instruction containing designated information used to reflect correction information selected by a user, the user image recognition model based on the correction information matching the designated information, and user image data corresponding to the correction information, .

In some alternative implementations of this embodiment, the designated information includes class information of a class to which the correction information selected by the user belongs, and the updating the user image recognition model based on the the correction information matching the designated information, and user image data corresponding to the correction information, , includes: updating the user image recognition model based on first correction information and the user image data corresponding to the first correction information, where a class of the first correction information matches the designated information.

In some alternative implementations of this embodiment, the designated information includes a target user identification corresponding to the correction information selected by the user, and the updating the user image recognition model based on the correction information matching the designated information, and user image data corresponding to the correction information, , includes: updating the user image recognition model, based on second correction information and the user image data corresponding to the second correction information, where a target user identification corresponding to the second correction information matches the designated information.

In some alternative implementations of this embodiment, the designated information includes a target user identification corresponding to the correction information selected by the user, and class information of a class to which the correction information selected by the user belongs, and the updating the user image recognition model based on the correction information matching the designated information, and user image data corresponding to the correction information, includes: updating the user image recognition model based on third correction information and the user image data corresponding to the third correction information, where a target user identification corresponding to the third correction information matches the designated information, and a class of the third correction information matches the designated information.

In some alternative implementations of this embodiment, the acquisition module is further configured to: acquire, in response to obtaining authorization of the at least one target user, the user image data of the at least one target user.

In some alternative implementations of this embodiment, the update module is further configured to: update, in response to a number of a piece of the user image data corresponding to the incorrect recognition result being greater than or equal to a preset number threshold, the user image recognition model based on the user image data corresponding to the incorrect recognition result, and the correction information.

According to an embodiment of the present disclosure, the present disclosure further provides an electronic device and a readable storage medium.

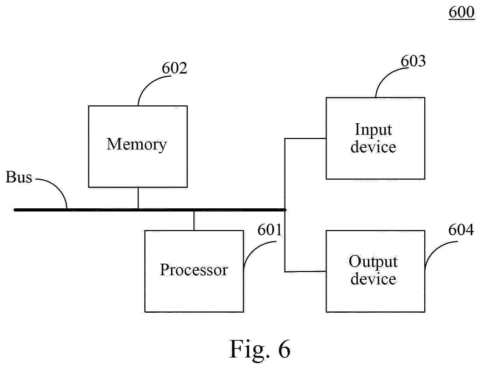

As shown in Fig. 6, a block diagram 600 of an electronic device adapted to implement the method for updating a user image recognition model according to an embodiment of the present disclosure is provided. The electronic device is intended to represent various forms of digital computers, such as laptops, desktops, worktables, personal digital assistants, servers, blade servers, mainframe computers and other suitable computers. The electronic device may also represent various forms of mobile devices, such as personal digital processing, cellular phones, smart phones, wearable devices and other similar computing devices. The parts, their connections and relationships, and their functions shown herein are examples only, and are not intended to limit the implementations of the present disclosure as described and/or claimed herein.

As shown in Fig. 6, the electronic device includes one or more processors 601, a memory 602 and interfaces for connecting components, including a high-speed interface and a low-speed interface. The components are interconnected by using different buses and may be mounted on a common motherboard or otherwise as required. The processor may process instructions executed within the electronic device, including instructions stored in memory or on memory to display graphical information of the GUI on an external input or output device (such as a display device coupled to an interface). In other embodiments, multiple processors and/or multiple buses and multiple memories may be used with multiple memories, if required. Similarly, multiple electronic devices may be connected (for example, used as a server array, a set of blade servers or a multiprocessor system), and the electronic device provides some of the necessary operations. An example of a processor 601 is shown in Fig. 6.

The memory 602 is a non-transitory computer readable storage medium according to the present disclosure. The memory stores instructions executable by at least one processor to cause the at least one processor to execute the method for updating a user image recognition model according to the present disclosure. The non-transitory computer readable storage medium of the present disclosure stores computer instructions for causing a computer to execute the method for updating a user image recognition model according to the present disclosure.

As a non-transitory computer readable storage medium, the memory 602 may be used to store non-transitory software programs, non-transitory computer executable programs and modules, such as the program instructions or modules corresponding to the method for updating a user image recognition model in the embodiment of the present disclosure (such as, the acquisition module 501, the recognition module 502, the correction module 503 and the update module 504 shown in Fig. 5). The processor 601 runs the non-transitory software programs, instructions and modules stored in the memory 602 to execute various functional applications and data processing of the server, thereby implementing the method for updating a user image recognition model in the embodiment of the method.

The memory 602 may include a storage program area and a storage data area, where the storage program area may store an operating system and an application program required by at least one function; and the storage data area may store data created by the electronic device when executing the method for updating a user image recognition model. In addition, the memory 602 may include a high-speed random access memory, and may further include a non-transitory memory, such as at least one magnetic disk storage device, a flash memory or other non-transitory solid state storage devices. In some embodiments, the memory 602 may alternatively include a memory disposed remotely relative to the processor 601, which may be connected through a network to the electronic device adapted to execute the method for updating a user image recognition model. Examples of such networks include, but are not limited to, the Internet, enterprise intranets, local area networks, mobile communication networks and combinations thereof.

The electronic device adapted to execute the method for updating a user image recognition model may further include an input device 603 and an output device 604. The processor 601, the memory 602, the input device 603 and the output device 604 may be interconnected through a bus or other means, and an example of a connection through a bus is shown in Fig. 6.

The input device 603 may receive input digit or character information, and generate key signal input related to user settings and functional control of the electronic device adapted to execute the method for updating a user image recognition model, such as a touch screen, a keypad, a mouse, a track pad, a touch pad, a pointer bar, one or more mouse buttons, a trackball or a joystick. The output device 604 may include a display device, an auxiliary lighting device (such as an LED) and a tactile feedback device (such as a vibration motor). The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or combinations thereof. The various embodiments may include: being implemented in one or more computer programs, where the one or more computer programs may be executed and/or interpreted on a programmable system including at least one programmable processor, and the programmable processor maybe a dedicated or general-purpose programmable processor, which may receive data and instructions from a memory system, at least one input device and at least one output device, and send the data and instructions to the memory system, the at least one input device and the at least one output device.

These computing programs (also known as programs, software, software applications or code) include machine instructions of a programmable processor and may be implemented in high-level procedures and/or object-oriented programming languages, and/or assembly or machine languages. As used herein, the terms "machine readable medium" and "computer readable medium" refer to any computer program product, device and/or apparatus (such as magnetic disk, optical disk, memory and programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component or front-end component. The components of the system may be interconnected by any form or medium of digital data communication (such as a communication network). Examples of communication networks include a local area network (LAN), a wide area network (WAN), and the Internet.

The computer system may include a client and a server. The client and the server are typically remote from each other and typically interact through a communication network. The relationship between the client and the server is generated by a computer program running on the corresponding computer and having a client-server relationship with each other.

According to the technical solutions of the embodiments of the present disclosure, the update effect of the user image recognition model is effectively improved.

It should be appreciated that the steps of reordering, adding or deleting may be executed using the various forms shown above. For example, the steps described in the present disclosure may be executed in parallel or sequentially or in a different order, so long as the expected results of the technical solutions provided in the present disclosure may be realized, and no limitation is imposed herein.

The above specific implementations are not intended to limit the scope of the present disclosure. It should be appreciated by those skilled in the art that various modifications, combinations, sub-combinations, and substitutions maybe made depending on design requirements and other factors. Any modification, equivalent and modification that fall within the spirit and principles of the present disclosure are intended to be included within the scope of the present disclosure.

## Claims

1. A method for updating a user image recognition model, the method comprising:
acquiring (201) user image data of at least one target user;
inputting (202) the user image data of at least one target user to a pre-trained user image recognition model respectively, to obtain a corresponding recognition result, the user image recognition model being configured to recognize the user image data;
acquiring (203), in responding to determining that the recognition result is an incorrect recognition result, correction information of the incorrect recognition result, the correction information being used to indicate a correct recognition result of the user image data corresponding to the incorrect recognition result; and
updating (204) the user image recognition model based on the user image data corresponding to the incorrect recognition result, and the correction information, to obtain an updated user image recognition model.

2. The method according to claim 1, wherein the updating the user image recognition model based on the user image data corresponding to the incorrect recognition result, and the correction information, comprises:
updating (404), in response to acquiring an update instruction containing designated information used to reflect correction information selected by a user, the user image recognition model based on correction information matching the designated information, and the user image data corresponding to the correction information matching the designated information.

3. The method according to claim 2, wherein the designated information comprises class information of a class to which the correction information selected by the user belongs, and the updating the user image recognition model based on the correction information matching the designated information, and the user image data corresponding to the correction information matching the designated information, comprises:
updating the user image recognition model based on first correction information and the user image data corresponding to the first correction information, wherein a class of the first correction information matches the designated information.

4. The method according to claim 2, wherein the designated information comprises a target user identification corresponding to the correction information selected by the user, and the updating the user image recognition model based on the correction information matching the designated information, and the user image data corresponding to the correction information matching the designated information, comprises:
updating the user image recognition model based on second correction information and the user image data corresponding to the second correction information, wherein a target user identification corresponding to the second correction information matches the designated information.

5. The method according to claim 2, wherein the designated information comprises a target user identification corresponding to the correction information selected by the user, and class information of a class to which the correction information selected by the user belongs, and the updating the user image recognition model, based on the correction information matching the designated information, and the user image data corresponding to the correction information matching the designated information, comprises:
updating the user image recognition model based on third correction information and the user image data corresponding to the third correction information, wherein a target user identification corresponding to the third correction information matches the designated information, and a class of the third correction information matches the designated information.

6. The method according to any one of preceding claims, wherein the acquiring user image data of at least one target user, comprises:
acquiring, in response to obtaining authorization of the at least one target user, the user image data of the at least one target user.

7. The method according to any one of preceding claims, wherein the updating the user image recognition model based on the user image data corresponding to the incorrect recognition result, and the correction information, comprises:
updating, in response to a number of a piece of the user image data corresponding to the incorrect recognition result being greater than or equal to a preset number threshold, the user image recognition model based on the user image data corresponding to the incorrect recognition result, and the correction information.

8. An apparatus for updating a user image recognition model, the apparatus comprising: modules to perform the method according to any one of claims 1 to 7.

9. An electronic device, comprising:
at least one processor; and
a memory communicatively connected with the at least one processor, wherein the memory stores instructions executable by the at least one processor, and the instructions, when executed by the at least one processor, cause the at least one processor to execute the method according to any one of claims 1 to 7.

10. A non-transitory computer readable storage medium storing computer instruction, wherein the computer instructions when executed by a computer, cause the computer to execute the method according to any one of claims 1 to 7.

11. A computer program comprising instructions which, when the program is executed by a computer, cause the computer to perform the method according to any one of claims 1 to 7.
